# EUROPEAN PATENT APPLICATION

(11) **EP 1 584 950 A2**
(43) Date of publication of application: **12.10.2005**
(21) Application number: 05006286.8
(22) Date of filing: 22.03.2005
(51) Int. Cl.: G01T 1/29

(54) **Radiation imaging panel with a photoconductive layer**

(30) Priority: 24.03.2004 JP 2004086141
(71) Applicant: FUJI PHOTO FILM CO., LTD., Kanagawa-ken (JP)
(72) Inventor: Kohda, Katsuhiro, Ashigarakami-gun, Kanagawa-ken (JP); Miyake, Kiyoteru, Ashigarakami-gun, Kanagawa-ken (JP); Kaito, Ryouzou, Ashigarakami-gun, Kanagawa-ken (JP)
(74) Representative: Klunker . Schmitt-Nilson . Hirsch

(57) **Abstract**

A photoconductive layer included in a radiation imaging panel for recording radiation image information as an electrostatic latent image is a polycrystal made of Bi₁₂MO₂₀, where M is at least one of Ge, Si and Ti, the filling factor of Bi₁₂MO₂₀ composing the photoconductive layer is 70% or more, and the thickness of the photoconductive layer is between 50 µm and 600 µm inclusive.

## Description

### BACKGROUND OF THE INVENTION

### Field of the Invention

The present invention relates to a radiation imaging panel which is favorably applied to a radiation imaging device such as an X-ray imaging device, and particularly to a photoconductive layer included in a radiation imaging panel.

### Description of the Related Art

In the field of medical X-ray imaging, X-ray imaging panels which use a photoconductive layer sensitive to X-rays as a sensitive material and which record an electrostatic latent image formed by X-rays onto this photoconductive layer by reading the image by the use of light or a large number of electrodes, for the purpose of decreasing the exposure dose received by a subject, improving the diagnostic performance, and the like, have heretofore been known. These panels are superior to the extent that these panels allow for high resolution compared to indirect radiography by the use of a TV imaging tube, which is a well known imaging method.

The above-described X-ray imaging panel is configured to generate electric charges corresponding to the energy of X-rays by irradiating a charge generating layer provided in the imaging panel with X-rays, and to read out the generated electric charges as electric signals. The above photoconductive layer functions as the charge generating layer. As the photoconductive layer, amorphous selenium has heretofore been used. However, since amorphous selenium generally has a low X-ray absorption coefficient, it is necessary to form the photoconductive layer to be thick (500 µm or more, for example).

However, when the film is thick, the following problems arise. That is, the reading speed is decreased, while contrast in the low dose range is decreased because, at least during the time from the start of reading out until the end thereof after the electrostatic latent image has been formed, application of high voltage to the photoconductive layer is performed and causes an increase in dark current, and the charges due to the dark current are added to the electrostatic latent image. Moreover, since a high voltage is applied, the device is apt to deteriorate. As a result, the durability is degraded and/or electric noise is easily generated. Furthermore, since the photoconductive layer is typically formed by a vapor deposition method, it takes considerable time until the photoconductive layer of the thickness as described above is formed. In addition, the control thereof is a demanding task. This results in an increase in manufacturing costs, and leads to an increase in the cost of the X-ray imaging panel.

In view of the above-described problems, materials of the photoconductive layer other than selenium are examined. For example, in Japanese Unexamined Patent Publication Nos. 11(1999)-237478 and 2000-249769, as a material composing the photoconductive layer, bismuth-oxide-based complex oxide represented by a composition formula of BiₓMO_{y} (where M is at least one of Ge, Si and Ti, x is a number satisfying the condition of 10≤x≤14, and y represents a stoichiometric number of oxygen atoms determined from the above M and x) is described. In addition, in "Transport processes of photoinduced carriers in Bi₁₂SiO₂₀" S.L. Hou, et al., J. Appl. Phys., Vol.44, No. 6, June 1973, pp. 2652-2658, a photoconductive layer made of a monocrystal of Bi₁₂SiO₂₀ is described. In "Properties of Pure and Doped Bi₁₂GeO₂₀ and Bi₁₂SiO₂₀ Crystals" B.C. Grabmaier and R. Oberschmid, Phys. Stat. Sol. (a) 96, 1986, pp. 199-210, monocrystals of Bi₁₂GeO₂₀ and Bi₁₂SiO₂₀ are described. With the bismuth-oxide-based complex oxide, increases the charge conversion efficiency with respect to X-rays can be expected.

Incidentally, in Japanese Unexamined Patent Publication Nos. 11 (1999)-237478 and 2000-249769, there is described that, as a method of forming the photoconductive layer, a sol or gel obtained by hydrolyzing bismuth alkoxide and metal alkoxide is subjected to a sintering treatment, and then the photoconductive layer is formed by dispersing and applying the sol or gel.

However, in general, there is a limit to the filling factor of the photoconductive material composing the photoconductive layer which can be formed by application. While achievement of a filling factor of 30 to 90% by application is described in Japanese Unexamined Patent Publication No. 2000-249769, actually, it is difficult to realize a filling factor of 70% or more in an object formed by application of powder. In addition, as for the photoconductive layer formed by the methods described in Japanese Unexamined Patent Publication Nos. 11(1999)-237478 and 2000-249769, there is the following problem. That is, since a binder, which is an insulator, exists between particles of photoconductive material, it becomes difficult for generated electric charges to flow. Therefore, the efficiency of collecting the electric charges which can reach the electrode is low, and the electric noise becomes large. Accordingly, the granularity of an image becomes worse. The photoconductive layer described in Japanese Unexamined Patent Publication Nos. 11(1999)-237478 and 2000-249769 has a low filling factor, resulting in a low X-ray absorption coefficient. So, they attempt to address this problem by increasing the film thickness. However, as described above, when the film thickness is increased, dark current increases, and the charges due to the dark current are added to the electrostatic latent image. Thus, the problem that contrast in the low dose range is decreased cannot be solved.

On the other hand, since the monocrystal of Bi₁₂MO₂₀ described in "Transport processes of photoinduced carriers in Bi₁₂SiO₂₀" S.L. Hou, et al., J. Appl. Phys., Vol.44, No.6, June 1973, pp. 2652-2658 and "Properties of Pure and Doped Bi₁₂GeO₂₀ and Bi₁₂SiO₂₀ Crystals" B.C. Grabmaier and R. Oberschmid, Phys. Stat. Sol. (a) 96, 1986, pp. 199-210 contains few impurities, it is expected that dark current is reduced, and the amount of X-ray photocurrent is increased. However, the manufacturing cost thereof is high, and on top of this, widening of the area into the size of several dozen centimeters square for practical use is technically difficult. Accordingly, this is unsuitable for practical use.

### SUMMARY OF THE INVENTION

The present invention has been made in view of such circumstances. It is an object of the present invention to provide a photoconductive layer made of bismuth-oxide-based complex oxide which can realize high sensitivity even when the photoconductive layer is a thin film.

A photoconductive layer of the present invention, which is included in a radiation imaging panel for recording radiation image information as an electrostatic latent image, is characterized in that the photoconductive layer is a polycrystal made of Bi₁₂MO₂₀, where M is at least one of Ge, Si and Ti (the definition of M applies to the following description, and therefore will be omitted hereinafter), the filling factor of Bi₁₂MO₂₀ composing the photoconductive layer is 70% or more, and the thickness of the photoconductive layer is between 50 µm and 600 µm inclusive.

The "polycrystal" generally refers to a solid body into which monocrystals with different orientations are aggregated. The polycrystal mentioned herein also means an object into which monocrystals with different orientations are aggregated, the object being in a state where monocrystals formed by sintering, aerosol deposition, vapor growth or the like are compactly aggregated, and where the crystals are in contact with or bonded to each other, and the object not including any bonding material (binder) made of organic material, polymeric material, or inorganic material.

The filling factor is preferably 80% or more, and more preferably between 90 and 99.5%. Moreover, the photoconductive layer is preferably a sintered film. Here, the sintered film means a film formed in such a way that Bi₁₂MO₂₀ powder is heated at a temperature of its melting point or less, or at which there exists a small amount of liquid phase, and bonding or coalescence between the constituting particles occurs.

Since the photoconductive layer of the present invention is a polycrystal made of Bi₁₂MO₂₀, it is possible to widen the area of the photoconductive layer, and on top of this, it is possible to keep the manufacturing cost of the photoconductive layer low compared to that of the monocrystal of Bi₁₂MO₂₀. Moreover, since particles of the photoconductive material are in contact with each other, the decrease in the efficiency of collecting generated electric charges, due to the existence of a binder as in the case of the photoconductive layer formed by application, can be prevented. Therefore, it becomes possible to reduce electric noise, the granularity of an image is improved, and it becomes possible to increase the sensitivity.

Furthermore, since the filling factor of Bi₁₂MO₂₀ composing the photoconductive layer is 70% or more, the photoconductive layer becomes a compact layer, and the efficiency of collecting generated electric charges is increased. Accordingly, it becomes possible to increase the sensitivity. Furthermore, since the filling factor of the photoconductive layer is large and therefore the X-ray absorption coefficient is increased, it is possible to use a film with the film thickness being between 50 µm and 600 µm inclusive. Accordingly, it is possible to increase the reading speed of the radiation imaging panel, and the dark current is reduced.

In addition, by taking the filling factor of 80% or more, and more preferably, taking the filling factor between 90 and 99.5%, and further preferably, taking the photoconductive layer of a sintered film, it is possible to further increase the effect of collecting the generated electric charges, and to increase the sensitivity.

### BRIEF DESCRIPTION OF THE DRAWINGS

FIG. 1 is a schematic configuration cross sectional view illustrating a method of manufacturing a Bi₁₂MO₂₀ sintered body.
FIG. 2 is an outline schematic diagram of a deposition system which is used in a method of manufacturing a photoconductive layer of the present invention.
FIG. 3 is a cross sectional view showing an embodiment of a radiation imaging panel having the photoconductive layer manufactured by the manufacturing method of the present invention.
FIG. 4 is a schematic configuration diagram of a recording and reading system using the radiation imaging panel.
FIGS. 5A, 5B, 5C and 5D are diagrams showing an electrostatic latent image recording process in the recording and reading system by an electric charge model.
FIGS. 6A, 6B, 6C and 6D are diagrams showing an electrostatic latent image reading process in the recording and reading system by the electric charge model.
FIG. 7 is an outline schematic diagram showing a joined state of a radiation detecting unit and an active matrix array (AMA) substrate.
FIG. 8 is a schematic cross sectional view showing a pixel of the radiation detecting unit.
FIG. 9 is a circuit diagram showing an equivalent circuit of the AMA substrate.

### DESCRIPTION OF THE PREFERRED EMBODIMENTS

A photoconductive layer of the present invention is characterized in that the photoconductive layer is a polycrystal made of Bi₁₂MO₂₀, the filling factor of Bi₁₂MO₂₀ composing the photoconductive layer is 70% or more, and the thickness of the photoconductive layer is between 50 µm and 600 µm inclusive. The filling factor is preferably 80% or more, and more preferably between 90 and 99.5%. When the filling factor is less than 70%, the effect of collecting generated electric charges is decreased. On the other hand, when it is attempted to realize a filling factor more than 99.5%, considerably high temperature and pressure are required to manufacture the photoconductive layer, and it is possible that the generated electric charge characteristic will be deteriorated in the manufacturing process. In addition, the thickness of the photoconductive layer is preferably between 70 and 400 µm, and more preferably between 80 and 300 µm. When the thickness of the photoconductive layer is less than 50 µm, the X-ray absorption coefficient is lowered, and the improvement of sensitivity cannot be expected. On the other hand, when the thickness of the photoconductive layer is more than 600 µm, the X-ray absorption coefficient does not increase anymore owing to saturation. Moreover, in this case, since the generated electric charge has to move a long distance until reaching an electrode, the electric charges are deactivated on the way, and thus the collection efficiency is lowered. As a result of this, the image deteriorates rather than improves.

As a method of manufacturing a photoconductive layer which is a polycrystal made of Bi₁₂MO₂₀ and of which the filling factor of Bi₁₂MO₂₀ is 70% or more, a method can be cited as a first method, the method including: obtaining a precursor liquid of Bi₁₂MO₂₀ by reacting a bismuth salt with a metal alkoxide under acid conditions; applying the obtained precursor liquid of Bi₁₂MO₂₀ onto a support; and sintering the Bi₁₂MO₂₀ film or the Bi₁₂MO₂₀ precursor film which is made by drying the precursor liquid.

It is preferable that the bismuth salt be bismuth nitrate or bismuth acetate. As preferred examples of metal alkoxide, alkoxides containing Ge, Si, or Ti can be named. More specifically, Ge (O-CH₃)₄, Ge (O-C₂H₅)₄, Ge (O-iC₃H₇)₄, Si (O-CH₃)₄, Si (O-C₂H₅)₄, Si (O-iC₃H₇)₄, Ti (O-CH₃)₄, Ti (O-C₂H₅)₄, and Ti (O-iC₃H₇)₄ can be named.

As a method of hydrolyzing a bismuth salt and a metal alkoxide under acid conditions, it is possible to adopt a known method as appropriate. For example, it is preferable to hydrolyze a bismuth salt and a metal alkoxide with acetic acid, a mixture aqueous solution of 2-methoxyethanol and nitric acid, a mixture aqueous solution of 2-ethoxyethanol and nitric acid, and the like.

After the hydrolysis, a precursor liquid of Bi₁₂MO₂₀ can be obtained. It is preferable to concentrate or reflux the liquid before applying the liquid on the support. This is because, if primary baking is conducted without concentration or reflux, depending on the temperature conditions of the primary baking, there are cases where other compositions such as Bi₂MO₅ and Bi₄M₃O₁₂ are formed, in addition to the composition of Bi₁₂MO₂₀.

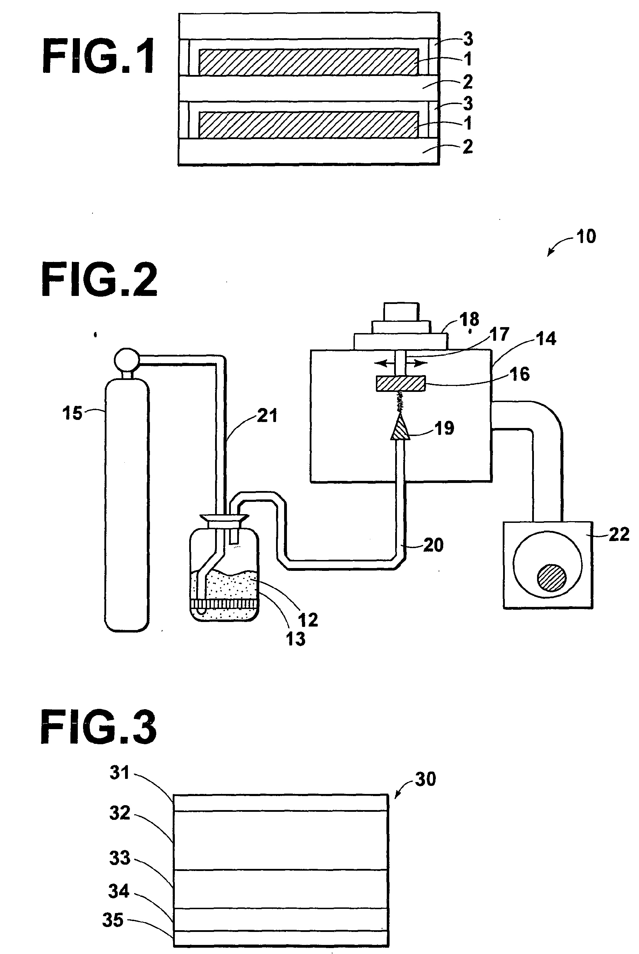

In the case where the precursor film of Bi₁₂MO₂₀ applied onto the support is sintered, it is preferable that, when a material to be baked (compact) which is formed out of the precursor film of Bi₁₂MO₂₀ is sintered, an oxide material, specifically a sintered body of aluminum oxide, a sintered body of zirconium oxide, a single crystal of aluminum oxide or the like be used as a setter which is a board on which the compact is placed. By performing sintering by the use of such a setter, it becomes possible to manufacture a Bi₁₂MO₂₀ sintered body without fusing the sintered body and the setter. A schematic configuration cross sectional view representing a method of manufacturing the Bi₁₂MO₂₀ sintered body of the present invention is shown in FIG. 1.

FIG. 1 shows a state before starting baking, where materials to be baked 1 are placed on setters 2 which are set up to be a shelf via columns 3. The material to be baked 1 is a lamellate compact of the precursor film of Bi₁₂MO₂₀. The setter 2 is preferably made of an oxide material, such as a sintered body of aluminum oxide, a sintered body of zirconium oxide, or a single crystal of aluminum oxide, the silicon oxide content of which is 1 wt% or less, and more preferably 0.3 wt% or less.

The plural columns 3 are disposed at predetermined intervals in the vicinity of the periphery of the setter. The material to be baked 1 is placed on the setter 2 inside the columns 3. It should be noted that baking may be performed in a state where a weight plate is put on the material to be baked during sintering. It is preferable that the sintering temperature be between 800°C and 900°C, although this is not always true because the sintering temperature varies depending on the kind of the material to be baked, the kind of the setter, the combination of the material to be baked and the setter, and the like. Ordinarily, in the case of the setter made of a platinum material which is used for sintering, if sintering is performed at such a high temperature, the Bi₁₂MO₂₀ sintered body cannot be obtained because the setter and the material to be baked will be fused. However, by using the above described oxide material for the setter 2, the material to be baked 1 can be formed without fusing the material to be baked 1 and the setter 2.

As the other methods of manufacturing the photoconductive layer of the present invention, the following methods can be cited for example. A second method is the Aerosol Deposition Method (AD method) in which Bi₁₂MO₂₀ powder previously prepared is stirred by a carrier gas in a vacuum, and the Bi₁₂MO₂₀ powder is deposited on the support by blowing the carrier gas in which the Bi₁₂MO₂₀ powder is mixed on the support in a vacuum. A third method is a press sintering method in which the Bi₁₂MO₂₀ powder is formed into a film by pressing the Bi₁₂MO₂₀ powder under high pressure by the use of a pressing machine, and the obtained film is sintered. A fourth method is a method in which a green sheet, which is a binder-containing film, is prepared by application of the Bi₁₂MO₂₀ powder by the use of binder, and binder removal and sintering of the powder is performed by baking this green sheet (hereinafter referred to as the green sheet method).

As a method of preparing the Bi₁₂MO₂₀ powder for use in the above described second to fourth manufacturing methods, the following methods can be cited for example. One method is a method in which the precursor liquid of Bi₁₂MO₂₀ is obtained by hydrolyzing a bismuth salt and a metal alkoxide under acid conditions, the obtained precursor liquid of Bi₁₂MO₂₀ is concentrated into a gel form, and the precursor gel of Bi₁₂MO₂₀ is baked into the Bi₁₂MO₂₀ powder. Another method is a method in which bismuth oxide (Bi₂O₃) and MO₂ (silicon oxide, germanium oxide, or titanium oxide) are mixed, and the Bi₁₂MO₂₀ powder is obtained by solid state reaction by under-baking the mixture at 800°C for example.

Incidentally, while a binder is used in the green sheet method, this binder is perfectly eliminated by the sintering, and thus the binder does not remain in the sintered body of Bi₁₂MO₂₀ₓ obtained after the sintering. As preferred examples of binder used in the green sheet method, cellulose acetate, Poly (alkyl methacrylate), Poly(vinyl alcohol), Poly(vinyl butyral) or the like can be named.

As preferred examples of bismuth salt and metal alkoxide, those described in the above first manufacturing method can be named. In addition, as preferred examples of the method of reacting a bismuth salt and a metal alkoxide under acid conditions also, those described in the above first manufacturing method can be named.

The above described Bi₁₂MO₂₀ powder used in the second manufacturing method can be obtained also by reacting the bismuth alkoxide and the metal alkoxide under alkaline conditions to obtain a precursor liquid of Bi₁₂MO₂₀, and then crystallizing the obtained precursor liquid of Bi₁₂MO₂₀ in the liquid phase.

Here, as preferred examples of bismuth alkoxide, Bi (O-CH₃)₃, Bi(O-C₂H₅)₃, Bi(O-iC₃H₇)₃ or the like can be named. As preferred examples of metal alkoxide, those described in the above first manufacturing method can be named. As a method of hydrolyzing a bismuth alkoxide and a metal alkoxide under alkaline conditions, it is possible to adopt a well known method as appropriate. It is preferable to hydrolyze a bismuth alkoxide and a metal alkoxide with sodium hydroxide, potassium hydroxide or the like.

The AD method described in the second manufacturing method is a technique for forming a coating in such a way that particulate or ultrafine particle raw material, which is prepared in advance, is mixed with a carrier gas and aerosolized, and then sprayed onto a substrate through a nozzle. A description will be given of the detail of the method using FIG. 2. FIG. 2 is an outline schematic diagram of a deposition system for performing the AD method, which is used to manufacture the photoconductive layer of the present invention.

A manufacturing system 10 includes an aerosolizing chamber 13 in which Bi₁₂MO₂₀ raw material particles 12 and a carrier gas are agitated and mixed, a deposition chamber 14 in which deposition is performed, and a high-pressure gas cylinder 15 containing the carrier gas. In addition, the deposition chamber 14 is provided with a substrate 16 on which the Bi₁₂MO₂₀ raw material particles 12 are deposited, a holder 17 for holding the substrate 16, a stage 18 which causes three dimensional actuation of the holder 17 in XYZ axes and about θ axis, and a nozzle 19 which has a small opening for spraying the Bi₁₂MO₂₀ raw material 12 onto the substrate 16. The manufacturing system 10 further includes a first piping 20 which connects the nozzle 19 and the aerosolizing chamber 13, a second piping 21 which connects the aerosolizing chamber 13 and the high-pressure gas cylinder 15, and a vacuum pump 22 which reduces pressure in the deposition chamber 14.

The Bi₁₂MO₂₀ raw material particles 12 in the aerosolizing chamber 13 are deposited on the substrate 16 by the following procedure. The Bi₁₂MO₂₀ rawmaterial particles 12 of 0.1 to 2 µm filled in the aerosolizing chamber 13 are vibrated and agitated with the carrier gas which is introduced into the aerosolizing chamber 13 from the high-pressure gas cylinder 15 containing the carrier gas through the second piping 21. In this manner, the Bi₁₂MO₂₀ raw material particles 12 are aerosolized. The aerosolized Bi₁₂MO₂₀ raw material particles 12 pass through the first piping 20, and are sprayed onto the substrate 16 with the carrier gas from the nozzle 19 having the small opening in the deposition chamber 14. Thus, a coating is formed. The deposition chamber 14 is evacuated by the vacuum pump 22, and the degree of vacuum in the deposition chamber 14 is adjusted as needed. Moreover, since the holder for the substrate 16 can move three-dimensionally by means of the XYZ-θ stage 18, a Bi₁₂MO₂₀ coating having a necessary thickness is formed on a predetermined portion of the substrate 16.

For the rawmaterial particles, it is preferable to use a powder, the average particle diameter of which is substantially between 0.1 to 10 µm. More preferably, a powder which contains 50 wt% or more of particles having the particle diameters of 0.1 to 2 µm is used. Here, the particle diameter means the equivalent diameter of an equal volume sphere which is the diameter of a sphere having a volume equal to the particle. The average means the number average.

The aerosolized raw material particles are easily accelerated to a flow speed of 2 to 300 m/sec by allowing the particles to pass through the nozzle with a minute opening of 6 mm² or less, and can be deposited on the substrate by allowing the particles to collide with the substrate by means of the carrier gas. Since the particles that collide with the substrate by means of the carrier gas are joined to each other to form a film owing to the impact of the collision, a compact film is deposited. While the temperature of the substrate during the deposition of the raw material particles may be room temperature, it is possible to deposit a more compact film by regulating the temperature between 100°C and 300°C.

As for the radiation imaging panel, there are the direct conversion method in which radiation is directly converted into electric charges and the electric charges are accumulated, as well as the indirect conversion method in which radiation is temporarily converted into light by a scintillator such as CsI, the light is converted into electric charges by a-Si photodiodes and the electric charges are accumulated. The photoconductive layer of the present invention can be used in the former direct conversion method. Incidentally, as for the radiation, the photoconductive layer can be used for gamma rays, alpha rays or the like as well as X-rays.

In addition, the photoconductive layer of the present invention can be used in the so-called optical reading method in which reading is performed by the use of a radiation image detector using a semiconductor material which generates electric charges by irradiation of light, and also can be used in the method in which the electric charges generated by irradiation of radiation are accumulated and the accumulated electric charges are read out by switching on and off electric switches such as thin film transistors (TFTs) pixel by pixel (hereinafter referred to as the TFT method).

First, a radiation imaging panel used in the former optical reading method is taken as an example, and will be described. FIG. 3 shows a cross sectional view showing an embodiment of a radiation imaging panel having the photoconductive layer of the present invention.

This radiation imaging panel 30 is formed by stacking: a first conductive layer 31 which is transparent with respect to radiation L1 for recording to be described later; a recording radio-conductive layer 32 that exhibits conductivity by receiving irradiation of the radiation L1 which has passed through the conductive layer 31; a charge transport layer 33 which substantially acts as an insulator to the electric charges with which the conductive layer 31 is electrified (latent-image polarity charge; negative charge, for example), and which substantially acts as a conductor to the electric charges with a polarity opposite to the above electric charges (transport polarity charges; in the case of the above described example, positive charges) ; a reading photoconductive layer 34 that exhibits conductivity by receiving irradiation of reading light L2 for reading to be described later; and a second conductive layer 35 which is transparent with respect to the reading light L2, in this order.

Here, as the conductive layers 31 and 35, for example, one which is formed by evenly applying conductive material onto a transparent glass plate, such as a NESA film, is suitable. As for the charge transport layer 33, the larger the difference between the mobility of negative charge with which the conductive layer 31 is electrified and the mobility of the opposite positive charge, the better. An organic compound such as Poly(N-vinylcalbazole) (PVK),
N,N'-diphenyl-N,N'-bis(3-methylphenyl)-(1,1'-diphenyl)-4,4'-dia mine (TPD) or discotic liquid crystal, a polymer (polycarbonate, polystyrene, or PVK) in which TPD is dispersed, or a semiconductor material such as a-Se which is doped with 10 to 200 ppm of Cl, is suitable for the charge transport layer 33. Especially, the organic compound, such as PVK, TPD or discotic liquid crystal, is preferable because it has insensitivity to light. Moreover, since the organic compound generally has a small dielectric constant, the capacitance between the recording radio-conductive layer 32 and the reading photoconductive layer 34 is made small. Accordingly, it becomes possible to increase the signal extraction efficiency during readout.

For the reading photoconductive layer 34, a photoconductive material which has, as the main ingredient, at least one of a-Se, Se-Te, Se-As-Te, metal-free phthalocyanine, metal phthalocyanine, magnesium phthalocyanine (MgPc), phase II of vanadyl phthalocyanine (VoPc), cupper phthalocyanine (CuPc) and the like is preferable.

For the recording radio-conductive layer 32, the photoconductive layer of the present invention is used. In other words, the photoconductive layer of the present invention is a recording radio-conductive layer.

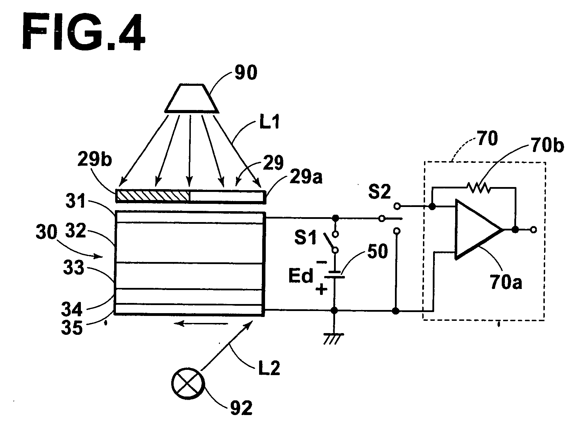

Next, a brief description will be given of the method in which light is used to read out an electrostatic latent image. FIG. 4 is a schematic configuration diagram of a recording and reading system (one into which an electrostatic latent image recording system and an electrostatic latent image reading system are combined) using the radiation imaging panel 30. The recording and reading system includes the radiation imaging panel 30, recording irradiation means 90, a power supply 50, electric current detecting means 70, reading light-irradiation means 92 and connecting means S1 and S2. The part of the electrostatic latent image recording system includes the radiation imaging panel 30, the power supply 50, the recording irradiation means 90 and the connecting means S1. The part of the electrostatic latent image reading system includes the radiation imaging panel 30, the electric current detecting means 70 and the connecting means S2.

The conductive layer 31 of the radiation imaging panel 30 is connected to the anode of the power supply 50 via the connecting means S1 and connected to one terminal of the connecting means S2. One of the other terminals of the connecting means S2 is connected to the electric current detecting means 70. The conductive layer 35 of the radiation imaging panel 30, the cathode of the power supply 50, and the other one of the other terminals of the connecting means S2 are grounded. The electric current detecting means 70 includes a detecting amplifier 70a using an operational amplifier and a feedback register 70b, constituting a so-called current-voltage conversion circuit.

A subject 29 is disposed to face the upper surface of the conductive layer 31. In the subject 29, there exist a portion 29a which is transparent with respect to the radiation L1 and an interception portion (light shielding portion) 29b which does not have transparency. The recording irradiation means 90 preferably irradiates the subject 29 with the radiation L1 uniformly. The reading light-irradiation means 92 preferably performs irradiation of the reading light L2 such as lights of an infrared laser, LED, EL or the like in a scanning manner in the direction of the arrow in FIG. 4. The reading light L2 preferably has a beam shape which is converged into a thin diameter.

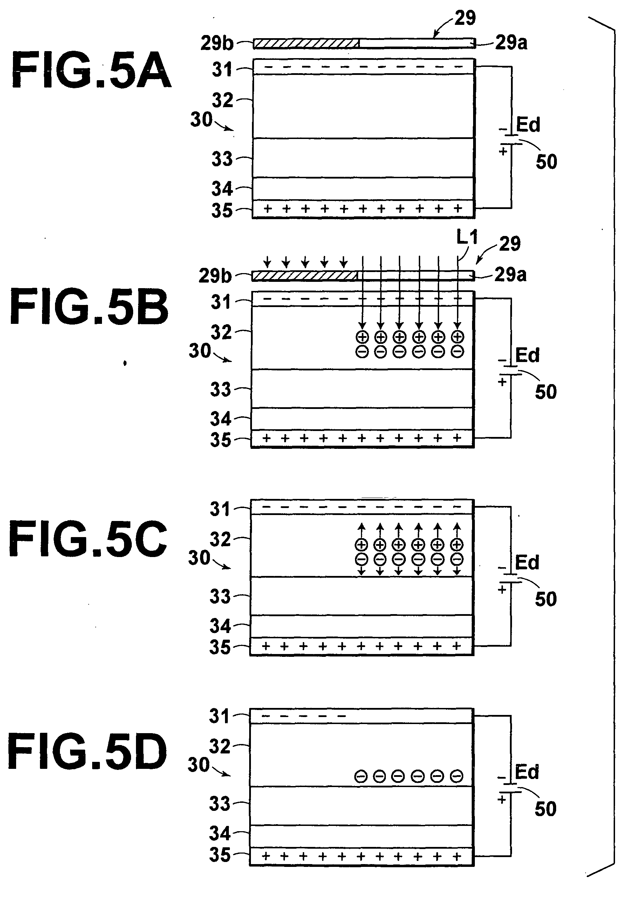

Hereinbelow, a description will be given of the electrostatic latent image recording process in the recording and reading system of the above configuration with reference to the electric charge model (FIG. 5). In FIG. 4, the connecting means S2 is opened, that is, the connecting means S2 is not allowed to connect with either the ground or the electric current detecting means 70, and the connecting means S1 is switched on. In this manner, a direct voltage Ed by the power supply 50 is applied between the conductive layers 31 and 35, thereby electrifying the conductive layer 31 with negative charge and the conductive layer 35 with positive charge by means of the power supply 50 (see FIG. 5A). Therefore, in the radiation imaging panel 30, a parallel electric field is formed between the conductive layers 31 and 35.

Subsequently, the radiation L1 is uniformly emitted from the recording irradiation means 90 toward the subject 29. The radiation L1 passes through the transmission portion 29a of the subject 29 and further passes through the conductive layer 31. The radio-conductive layer 32 comes to exhibit conductivity by receiving the passed-through radiation L1. This can be understood by considering that the radio-conductive layer 32 acts as a variable resistor which exhibits a variable resistance value in response to the dose of the radiation L1. The resistance value depends on generation of electric charge pairs of electron (negative charge) and hole (positive charge) due to the radiation L1. The smaller the dose of the radiation L1 which has passed through the subject 29 is, the larger resistance value the radio-conductive layer 32 exhibits (see FIG. 5B). Incidentally, the negative charges (-) and the positive charges (+) generated by the radiation L1 are represented by circled "-" and "+" respectively in the drawings.

The positive charges generated in the radio-conductive layer 32 move fast toward the conductive layer 31 through the radio-conductive layer 32, recombine with the negative charges, with which the conductive layer 31 is electrified, at the interface between the conductive layer 31 and the radio-conductive layer 32, and disappear (see FIGS. 5C and 5D). On the other hand, the negative charges generated in the radio-conductive layer 32 move toward the charge transport layer 33 through the radio-conductive layer 32. The charge transport layer 33 acts as an insulator to the electric charge of the same polarity (in this case, negative charge) as that of the electric charge with which the conductive layer 31 is electrified. Accordingly, the negative charges which have moved through the radio-conductive layer 32 stop at the interface between the radio-conductive layer 32 and the charge transport layer 33, and are accumulated at the interface (see FIGS. 5C and 5D). The amount of the accumulated electric charge is determined by the amount of the negative charge generated in the radio-conductive layer 32, that is, the dose of the radiation L1 which has passed through the subject 29.

On the other hand, since the radiation L1 does not pass through the light shielding portion 29b of the subject 29, the portion of the radiation imaging panel 30 below the light shielding portion 29b does not change at all (see FIGS. 5B to 5D). Thus, by irradiating the subject 29 with the radiation L1, it becomes possible to accumulate the electric charges according to the subject image at the interface between the radio-conductive layer 32 and the charge transport layer 33. Incidentally, the subject image formed by the accumulated electric charges is referred to as the electrostatic latent image.

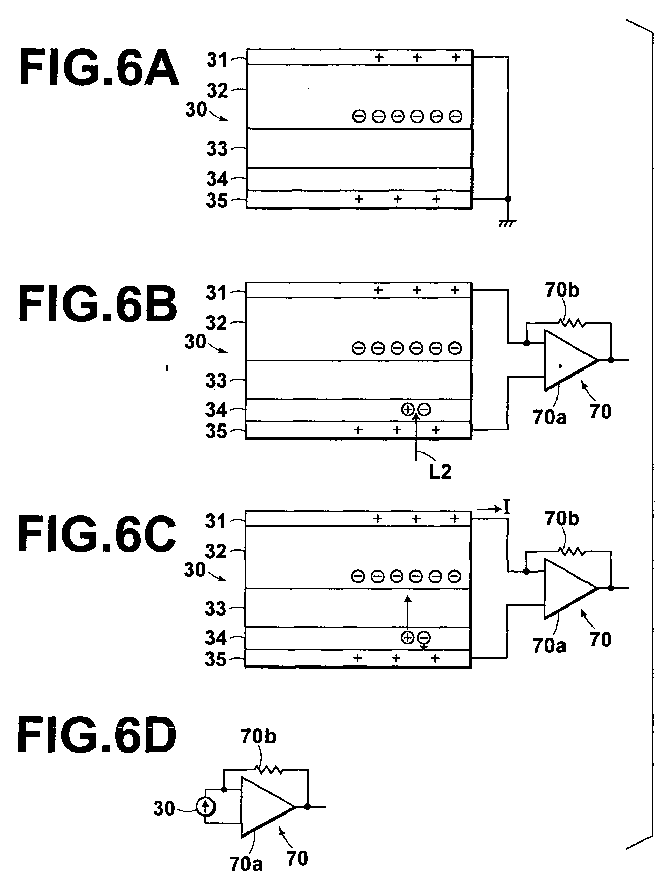

Next, a description will be given of the electrostatic latent image reading process with reference to the electric charge model (FIG. 6). The connecting means S1 is opened to stop the electricity supply, and the connecting means S2 is temporarily connected to the ground side. In this manner, electric charges are rearranged by equipotentially electrifying the conductive layers 31 and 35 of the radiation imaging panel 30 on which the electrostatic latent image is recorded (see FIG. 6A). Thereafter, the connecting means S2 is connected to the electric current detecting means 70 side.

When the conductive layer 35 side of the radiation imaging panel 30 is irradiated with the reading light L2 in a scanning manner by the reading light-irradiation means 92, the reading light L2 passes through the conductive layer 35, and the photoconductive layer 34 irradiated with the passed-through reading light L2 comes to exhibit conductivity in response to the scanning irradiation. As in the case where the above described radio-conductive layer 32 exhibits conductivity due to the generation of electric-charge pairs of positive and negative charges by receiving the irradiation of the radiation L1, this conductivity depends on the generation of electric-charge pairs of positive and negative charges by receiving the irradiation of the reading light L2 (see FIG. 6B). Incidentally, as in the case of the recording process, the negative charges (-) and the positive charges (+) generated by the reading light L2 are represented by circled "-" and "+" respectively in the drawings.

Since the charge transport layer 33 acts as a conductor to the positive charge, the positive charges generated in the photoconductive layer 34 move fast through the charge transport layer 33 in such a manner that the positive charges are attracted by the accumulated electric charges, undergo charge recombination with the accumulated charges at the interface of the radio-conductive layer 32 and the charge transport layer 33, and disappear (see FIG. 6C). On the other hand, the negative charges generated in the photoconductive layer 34 undergo charge recombination with the positive charges in the conductive layer 35, and disappear (see FIG. 6C). Since the photoconductive layer 34 is irradiated with a sufficient amount of the reading light L2 in a scanning manner, the electrostatic latent image, that is, all the electric charges accumulated at the interface between the radio-conductive layer 32 and the charge transport layer 33 disappear by the charge recombination. The fact that the electric charges accumulated in the radiation imaging panel 30 disappear like this means that electric current I due to the movement of the electric charges has flown in the radiation imaging panel 30. Accordingly, this state can be shown by such an equivalent circuit as is shown in FIG. 6D in which the radiation imaging panel 30 is represented as a current source the current amount of which depends on the amount of the accumulated electric charge.

In this manner, by detecting the electric current flowing out of the radiation imaging panel 30 while scanning irradiation of the reading light L2 is being performed, it becomes possible to sequentially read out the accumulated electric charges in the each part (corresponding to each pixel) where the scanning irradiation has been performed. Accordingly, the electrostatic latent image can be read out. Incidentally, the operation of the radiation detecting unit is described in Japanese Unexamined Patent Publication No. 2000-105297, for example.

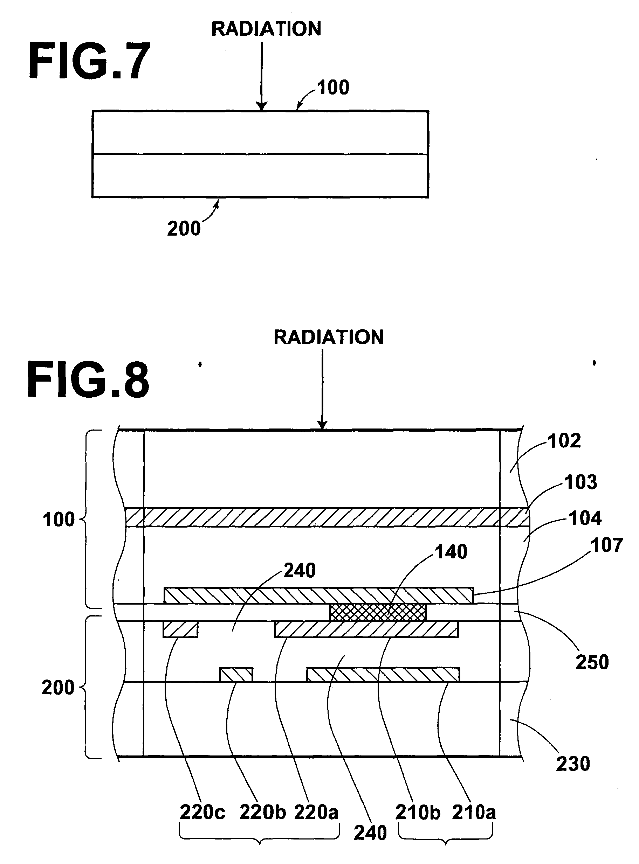

Next, a description will be given of the radiation imaging panel of the latter TFT method. As shown in FIG. 7, the radiation imaging panel has such a structure that a radiation detecting unit 100 and an active matrix array substrate (hereinafter referred to as the AMA substrate) 200 are joined. As shown in FIG. 8, the radiation detecting unit 100 has such a configuration that, as main constituents, a common electrode 103 for applying bias voltage, a photoconductive layer 104 generating carriers which are electron-hole pairs in response to the radiation to be detected, and a detecting electrode 107 for collecting carriers are stacked in this order from the side of incidence of radiation. A radiation-detecting-unit support 102 may be provided to an upper layer of the common electrode.

The photoconductive layer 104 is the photoconductive layer made of Bi₁₂MO₂₀ of the present invention. The common electrode 103 and the detecting electrode 107 are made of conductive material such as indium tin oxide (ITO), Au or Pt. In accordance with the polarity of the bias voltage, a hole injection blocking layer or an electron injection blocking layer may be provided optionally for the common electrode 103 and/or the detecting electrode 107.

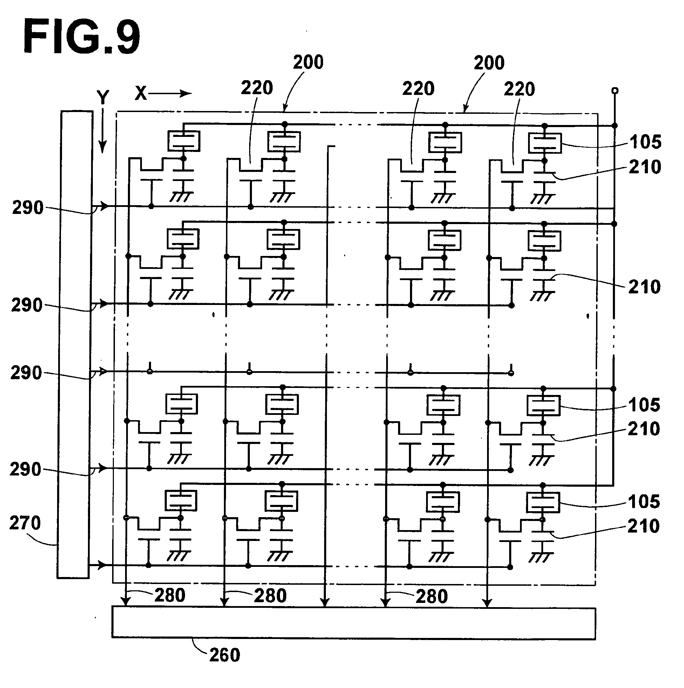

A brief description will be given of the configuration of each part of the AMA substrate 200. As shown in FIG. 9, in the AMA substrate 200, a capacitor 210 which provides the electric-charge accumulating capacitance and a TFT 220 as a switching element are provided to each of the radiation detecting part 105 corresponding to a pixel. In the support 102, the radiation detecting parts 105, each of which corresponds to a pixel, are two-dimensionally arranged in a matrix arrangement of about 1000 to 3000 pixels (vertical direction) x about 1000 to 3000 pixels (horizontal direction) in accordance with the required pixels. Moreover, also in the AMA substrate 200, the same number of pairs of the capacitor 210 and the TFT 220 as that of the pixels are two-dimensionally arranged in a similar matrix arrangement. The electric charges generated in the photoconductive layer are accumulated in the capacitor 210, forming an electrostatic latent image as in the case of the optical reading method. In the TFT method of the present invention, the electrostatic latent image generated by radiation is maintained by the electric-charge accumulating capacitance.

A specific configuration of the capacitor 210 and the TFT 220 in the AMA substrate 200 is as shown in FIG. 8. Specifically, an AMA substrate support 230 is an insulator, and is in a state where a connection-side electrode 210b of the capacitor 210 and both of a source electrode 220a and a drain electrode 220c of the TFT 220 are stacked, with an insulating film 240 interposed, above a ground-side electrode 210a of the capacitor 210 and a gate electrode 220b of the TFT 220 which are formed on the surface of the AMA substrate support 230, while the uppermost surface side thereof is covered with an insulating film 250 for protection. In addition, the connection-side electrode 210b and the source electrode 220a are united, which are formed simultaneously. As the insulating film 240, which forms both of the insulator of the capacitor 210 and the gate insulator of the TFT 220, a plasma SiN film is used, for example. This AMA substrate 200 is manufactured using such a thin film fabrication technology or a microprocessing technology as is used to fabricate a substrate for a liquid crystal display.

Next, a description will be given of the joining of the radiation detecting part 100 and the AMA substrate 200. Both substrates 100 and 200 are bonded by heating and pressing adhesion with an anisotropic conductive film (ACF) which contains conductive particles such as silver particles and has conductivity only in the thickness direction interposed therebetween in a state where the detecting electrode 107 and the connection-side electrode 210b of the capacitor 210 are aligned. In this manner, both substrates 100 and 200 are mechanically joined, while the detecting electrode 107 and the connection-side electrode 210b are electrically connected via an interposed conducting portion 140.

In addition, a reading driver circuit 260 and a gate driver circuit 270 are provided to the AMA substrate 200. As shown in FIG. 9, the reading driver circuit 260 is connected to vertical (Y) direction read lines (read address lines) 280 each of which connects the drain electrodes of the TFTs 220 which are in one column, and the gate driver circuit 270 is connected to horizontal (X) direction read lines (gate address lines) 290 each of which connects the gate electrodes of the TFTs 220 which are in one row. Incidentally, although not illustrated, in the reading driver circuit 260, a preamplifier (charge-voltage converter) is connected to each of the read lines 280. Thus, the reading driver circuit 260 and the gate driver circuit 270 are connected with the AMA substrate 200. However, one in which the reading driver circuit 260 and the gate driver circuit 270 are integrated in the AMA substrate 200 and integration is achieved is also used.

Incidentally, the operation of detecting radiation performed by the radiation imaging device into which the above described radiation detecting unit 100 and the AMA substrate 200 are joined and integrated is described in Japanese Unexamined Patent Publication No. 11(1999)-287862, for example.

Hereinbelow, examples of the photoconductive layer included in the radiation imaging panel of the present invention are shown.

### <Examples>

### (Example 1)

Bismuth oxide (Bi₂O₃) powder and silicon oxide (SiO₂) powder were mixed so that the molar ratio thereof was 6:1, and ball mill mixing was performed using zirconium oxide balls in ethanol. After this was collected and dried, under-baking at 800 °C for 8 hours was performed to obtain Bi₁₂SiO₂₀ powder by solid state reaction between the bismuth oxide and the silicon oxide. After the Bi₁₂SiO₂₀ powder was roughly crushed in a mortar so that the particle diameters thereof were decreased to 150 µm or less, crushing and dispersion thereof were performed by ball mill using zirconium oxide balls in ethanol. It should be noted that, in this process, 0.4 wt% of Poly(vinyl butyral) (PVB) was added as a disperser for accelerating the dispersion. Subsequently, 3.7 wt% of PVB as a binder and 0.8 wt% of dioctyl phthalate as a plasticizer were added, and crushing and dispersion by ball mill were continued. Thus, slurry for forming a sheet was prepared. The collected slurry was degassed and concentrated by a vacuum degassing treatment, so that the viscosity thereof was modified to 60 poises.

The slurry with the viscosity modified was applied onto a film base, to which a releasing agent had been applied, using a coater to have the form of a sheet. Subsequently, the slurry was dried by leaving it at room temperature for 24 hours, and then stripped from the film base. The formed material which was stripped off was placed on a setter of a sintered body of aluminum oxide (purity: 95%, content of silicon oxide: 2.7%), was subjected to a binder removal treatment, which is a treatment to gasify a binder by burning the binder, at 600°C for 2 hours, and then sintered at a sintering temperature of 800 °C for an hour. Gold was sputtered on each side of the produced film to form Au electrodes. Thus, a detecting unit of a radiation imaging panel provided with a photoconductive layer was completed.

A voltage of 500V was applied between the electrodes, and the irradiation of X-rays (tungsten lamp, 80kV) with the dose equal to 10mR was performed for 0.1 sec. The photocurrent which flowed between the electrodes during the irradiation was converted into voltage by the use of a current amplifier, and measured by the use of a digital oscilloscope. With respect to the obtained current-time curve, integration was performed over the time during the X-ray irradiation to calculate the amount of generated electric charge per area of the sample.

### (Example 2)

A detecting unit of a radiation imaging panel was completed similarly to Example 1 except that the sheet stripped from the film base was pressed under the pressure of 30MPa at room temperature by the use of a flat pressing machine.

### (Example 3)

A detecting unit of a radiation imaging panel was completed similarly to Example 2 except that the pressure applied to the formed material was set to 100MPa.

### (Example 4)

A detecting unit of a radiation imaging panel was completed similarly to Example 2 except that the pressure applied to the formed material was set to 200MPa.

### (Example 5)

The Bi₁₂SiO₂₀ powder prepared in Example 1 was roughly crushed in a mortar, ethanol was added thereto, and crushing and dispersion thereof by ball mill were performed. Thereafter, the ethanol was removed by filtration, and the powder was dried at 100°C to obtain the Bi₁₂SiO₂₀ powder with the average particle diameter of 0.5 µm.

This powder was sprayed onto a substrate, which had been coated with Au, by the use of the AD system shown in FIG. 2 under the conditions that the substrate temperature was 250°C, Ar gas was used as the carrier gas, and a total gas flow rate was 1 x 10⁻⁴ m³/s, so that a photoconductive layer made of Bi₁₂SiO₂₀ was deposited on the substrate with a film thickness of 200 µm. Gold was sputtered on the upper layer of the deposited film to form an Au electrode, so that a detecting unit of a radiation imaging panel provided with the photoconductive layer which was sandwitched between electrodes was completed.

### (Comparative Example 1)

A detecting unit of a radiation imaging panel was completed similarly to Example 1 except that the formed material subjected to the binder removal treatment in Example 1 was baked at 760°C.

### (Comparative Example 2)

A detecting unit of a radiation imaging panel was completed in such a way that, in Example 1, the photoconductive layer was produced only by applying and drying the viscosity modified slurry without the binder removal treatment or the baking, and the electrodes were provided to the photoconductive layer similarly to Example 1.

With respect to the sheets (photoconductive layers) of the Examples 1 to 5 and Comparative Examples 1 and 2 in a state where the electrodes were not provided thereto, the volumes were calculated from the areas and the film thicknesses thereof, and the weights of the sheets were measured. The densities (g/cm³) thereof were calculated from the obtained volumes and weights. The filling factors ((densities of samples)/9.14) were calculated from the bulk density, 9.14 g/cm³, of Bi₁₂SiO₂₀. Incidentally, as for Comparative Example 2, since the binder remained, the weight of the binder calculated from the mixture ratio was subtracted from the measured weight of the formed film to calculate the filling factor. The film thicknesses of the samples were between 200 and 220 µm. The filling factors and the amounts of generated electric charge are shown in Table 1. The amounts of generated electric charge are relative values provided that the amount of generated electric charge of Comparative Example 1 has the value of 100.

**[Table 1]**

| | Pressing pressure (MPa) | Filling factor (%) | Amount of generated electric charge (relative value) |
|---|---|---|---|
| Example 1 | 0 | 73 | 400 |
| Example 2 | 30 | 86 | 900 |
| Example 3 | 100 | 94 | 2050 |
| Example 4 | 200 | 96 | 2300 |
| Example 5 | - | 85 | 820 |
| Comparative Example 1 | - | 67 | 100 |
| Comparative Example 2 | - | 60 | 52 |

### (Example 6)

A radiation imaging panel was completed similarly to Example 1 except that the silicon oxide (SiO₂) powder was replaced by germanium oxide (GeO₂) powder.

### (Example 7)

A radiation imaging panel was completed similarly to Example 6 except that the sheet stripped from the film base was pressed under the pressure of 30MPa at room temperature by the use of a flat pressing machine.

### (Example 8)

A radiation imaging panel was completed similarly to Example 7 except that the pressure applied to the formed material was set to 100MPa.

### (Example 9)

A radiation imaging panel was completed similarly to Example 7 except that the pressure applied to the formed material was set to 200MPa.

### (Example 10)

The Bi₁₂GeO₂₀ powder prepared in Example 6 was roughly crushed in a mortar, ethanol was added thereto, and crushing and dispersion thereof by ball mill were performed. Thereafter, the ethanol was removed by filtration, and the powder was dried at 100°C to obtain the Bi₁₂GeO₂₀ powder with the average particle diameter of 0.5 µm. Then, a photoconductive layer made of Bi₁₂GeO₂₀ was deposited by the AD method under the same conditions as those of Example 5. Gold was sputtered on the upper layer of the deposited film to form an Au electrode, so that a detecting unit of a radiation imaging panel provided with the photoconductive layer which was sandwiched between electrodes was completed.

### (Comparative Example 3)

A detecting unit of a radiation imaging panel was completed similarly to Example 6 except that the formed material subjected to the binder removal treatment in Example 6 was baked at 760°C.

### (Comparative Example 4)

A detecting unit of a radiation imaging panel was completed in such a way that, in Example 6, the photoconductive layer was produced only by applying and drying the viscosity modified slurry without the binder removal treatment or the baking, and the electrodes were provided to the photoconductive layer similarly to Example 6.

With respect to the sheets (photoconductive layers) of the Examples 6 to 10 and Comparative Examples 3 and 4 in a state where the electrodes were not provided thereto, the volumes were calculated from the areas and the film thicknesses thereof, and the weights of the sheets were measured. The densities (g/cm³) thereof were calculated from the obtained volumes and weights. The filling factors ((densities of samples)/9.2) were calculated from the bulk density, 9.2 g/cm³, of Bi₁₂GeO₂₀. Incidentally, as for Comparative Example 4, since the binder remained, the weight of the binder calculated from the mixture ratio was subtracted from the measured weight of the formed film to calculate the filling factor as in the case of Comparative Example 2. The film thicknesses of the samples were between 200 and 220 µm. The filling factors and the amounts of generated electric charge are shown in Table 2. The amounts of generated electric charge are relative values provided that the amount of generated electric charge of Comparative Example 3 has the value of 100.

**[Table 2]**

| | Pressing pressure (MPa) | Filling factor (%) | Amount of generated electric charge (relative value) |
|---|---|---|---|
| Example 6 | 0 | 71 | 420 |
| Example 7 | 30 | 88 | 910 |
| Example 8 | 100 | 93 | 2000 |
| Example 9 | 200 | 97 | 2100 |
| Example 10 | - | 87 | 890 |
| Comparative Example 3 | - | 64 | 100 |
| Comparative Example 4 | - | 58 | 48 |

### (Example 11)

A radiation imaging panel was completed similarly to Example 1 except that the silicon oxide (SiO₂) powder was replaced by titanium oxide (TiO₂) powder.

### (Example 12)

A radiation imaging panel was completed similarly to Example 11 except that the sheet stripped from the film base was pressed under the pressure of 30MPa at room temperature by the use of a flat pressing machine.

### (Example 13)

A radiation imaging panel was completed similarly to Example 12 except that the pressure applied to the formed material was set to 100MPa.

### (Example 14)

A radiation imaging panel was completed similarly to Example 12 except that the pressure applied to the formed material was set to 200MPa.

### (Example 15)

The Bi₁₂TiO₂₀ powder prepared in Example 11 was roughly crushed in a mortar, ethanol was added thereto, and crushing and dispersion thereof by ball mill were performed. Thereafter, the ethanol was removed by filtration, and the powder was dried at 100°C to obtain the Bi₁₂TiO₂₀ powder with the average particle diameter of 0.5 µm. Then, a photoconductive layer made of Bi₁₂TiO₂₀ was deposited by the AD method under the same conditions as those of Example 5. Gold was sputtered on the upper layer of the deposited film to form an Au electrode, so that a detecting unit of a radiation imaging panel provided with the photoconductive layer which was sandwitched between electrodes was completed.

### (Comparative Example 5)

A detecting unit of a radiation imaging panel was completed similarly to Example 11 except that the formed material subjected to the binder removal treatment in Example 11 was baked at 760°C.

### (Comparative Example 6)

A detecting unit of a radiation imaging panel was completed in such a way that, in Example 11, the photoconductive layer was produced only by applying and drying the viscosity modified slurry without the binder removal treatment or the baking, and the electrodes were provided to the photoconductive layer similarly to Example 11.

With respect to the sheets (photoconductive layers) of the Examples 11 to 15 and Comparative Examples 5 and 6 in a state where the electrodes were not provided thereto, the volumes were calculated from the areas and the film thicknesses thereof, and the weights of the sheets were measured. The densities (g/cm³) thereof were calculated from the obtained volumes and weights. The filling factors ((densities of samples)/9.2) were calculated from the bulk density, 9.2 g/cm³, of Bi₁₂TiO₂₀. Incidentally, as for Comparative Example 6, since the binder remained, the weight of the binder calculated from the mixture ratio was subtracted from the measured weight of the formed film to calculate the filling factor as in the case of Comparative Example 2. The film thicknesses of the samples were between 200 and 220 µm. The filling factors and the amounts of generated electric charge are shown in Table 3. The amounts of generated electric charge are relative values provided that the amount of generated electric charge of Comparative Example 5 has the value of 100.

**[Table 3]**

| | Pressing pressure (MPa) | Filling factor (%) | Amount of generated electric charge (relative value) |
|---|---|---|---|
| Example 11 | 0 | 72 | 430 |
| Example 12 | 30 | 87 | 920 |
| Example 13 | 100 | 92 | 2010 |
| Example 14 | 200 | 98 | 2500 |
| Example 15 | - | 90 | 1950 |
| Comparative Example 5 | - | 66 66 | 100 |
| Comparative Example 6 | - | 59 59 | 56 |

As is apparent from Tables 1 to 3, when the filling factor of the photoconductive layer made of Bi₁₂MO₂₀ is 70% or more, the amount of generated electric charge is about four times larger compared to the photoconductive layer with the filling factor less than 70%; and moreover, when the filling factor is 90% or more, the amount of generated electric charge larger than 20 times that thereof has been recognized. Incidentally, according to the SEM observation, the produced photoconductive layer was a polycrystal made of Bi₁₂MO₂₀, and the crystal grain sizes thereof were from 0.05 to 5 µm.

As described above, the photoconductive layer of the present invention allows for improvement of sensitivity because the filling factor of Bi₁₂MO₂₀ composing the photoconductive layer is 70% or more, resulting in an increase in the effect of collecting the generated electric charges. Moreover, since the filling factor of the photoconductive layer is large and therefore the X-ray absorption coefficient is sufficient, it is possible to use a film with the film thickness between 50 µm and 600 µm inclusive. Accordingly, it is expected that the reading speed of the radiation imaging panel is increased and the dark current is reduced. In addition, since the photoconductive layer is a polycrystal made of Bi₁₂MO₂₀, it is possible to meet the widening of the area of the photoconductive layer.

## Claims

1. A photoconductive layer included in a radiation imaging panel for recording radiation image information as an electrostatic latent image, **characterized in that** the photoconductive layer is a polycrystal made of Bi₁₂MO₂₀, where M is at least one of Ge, Si and Ti, the filling factor of Bi₁₂MO₂₀ composing the photoconductive layer is 70% or more, and the thickness of the photoconductive layer is between 50 µm and 600 µm inclusive.

2. The photoconductive layer according to claim 1, **characterized in that** the filling factor is 80% or more.

3. The photoconductive layer according to claim 2, **characterized in that** the filling factor is between 90 and 99.5%.

4. The photoconductive layer according to any one of claims 1 to 3, **characterized in that** the photoconductive layer is a sintered film.
